Europäisches Patentamt

European Patent Office

Office européen des brevets

(11) Publication number: **0 292 275 B1**

# EUROPEAN PATENT SPECIFICATION

(45) Date of publication of patent specification: **29.07.92**

(51) Int. Cl.⁵: **C08L 81/02**, C08K 7/14, C08K 7/16, C08K 5/10

(21) Application number: **88304528.8**

(22) Date of filing: **19.05.88**

(54) **Polyarylene sulfide resin composition.**

(30) Priority: **22.05.87 JP 125147/87**

(43) Date of publication of application:
**23.11.88 Bulletin 88/47**

(45) Publication of the grant of the patent:
**29.07.92 Bulletin 92/31**

(84) Designated Contracting States:
**AT BE CH DE ES FR GB GR IT LI LU NL SE**

(56) References cited:
**EP-A- 0 003 156        EP-A- 0 212 478**
**EP-A- 0 236 835        GB-A- 2 028 834**
**US-A- 4 131 575        US-A- 4 134 874**
**US-A- 4 176 098        US-A- 4 395 509**
**US-A- 4 530 953        US-A- 4 544 700**

**PATENT ABSTRACTS OF JAPAN, vol. 7, no. 167 (C-177)(1312), 22nd July 1983; & JP - A - 58 74751 (HODOGAYA K.K.) 06-05-1983**

(73) Proprietor: **POLYPLASTICS CO. LTD.**
**30, Azuchimachi 2-chome**
**Higashi-ku Osaka-shi Osaka(JP)**

(72) Inventor: **Nitoh, Toshikatsu**
**973, Miyajima**
**Fuji-shi Shizuoka(JP)**
Inventor: **Nonaka, Toshifumi**
**973, Miyajima**
**Fuji-shi Shizuoka(JP)**

(74) Representative: **Jackson, Peter et al**
**HYDE, HEIDE & O'DONNELL 10-12 Priests Bridge**
**London SW15 5JE(GB)**

## Description

The present invention relates to a polyarylene sulfide resin composition.

More particularly, the present invention relates to a polyarylene sulfide resin composition, especially a polyphenylene sulfide resin composition, which is improved in release characteristics, is thermally and chemically stable, does not generate a decomposition gas or the like and has excellent mechanical characteristics.

( Statement of Prior Art )

Recently, thermoplastic resins having a high heat resistance are required as materials of components of electric and electronic appliances, parts of automobile equipment and parts of chemical instruments. A polyarylene sulfide resin is one of the resins satisfying this requirement. However, since the polyarylene sulfide resin has a good affinity with a metal and the shrinkage upon solidification from the molten state is small and because a precision molded body is often desired and a mold having a complicate shape is often used, the release of the molded body from the mold is bad in the molding operation, it is difficult to perform continuous molding stably and the molding speed is low (the molding cycle is long), with the result that the productivity is low.

Accordingly, in general, a releasing agent is added to the polyarylene sulfide resin and the resulting composition is subjected to the molding operation. Conventional releasing agents and release-improving methods are described below.

(1) A metal salt of a fatty acid, such as zinc stearate or lithium stearate, is added (Japanese Patent Laid-Open No. 162752/1979).

(2) A polyolefin such as polyethylene or polyethylene wax is added (Japanese Patent LaidOpen No. 47752/1979 and No. 229949/1985).

(3) A fatty acid ester such as glycerol stearate is added (Japanese Patent Laid-Open No. 74751/1983).

(4) A fatty acid amide such as N,N'-alkylenebis-alkanamide is added (U.S. Patent No. 4,395,509).

In each of the methods (1), (3) and (4), the thermal decomposition temperature of the releasing agent is lower than the molding temperature of the polyarylene sulfide resin, and a releasing effect is attained. However, these methods still involve problems caused by decomposition of the releasing agent, such as discoloration of a molded article, reduction of mechanical properties and generation of a gas at the kneading or molding step. Especially, the strength of the resin at the weld of the molded article is reduced by the generated gas.

In the method (2), the problems of discoloration and generation of a gas are not serious, but mechanical properties are drastically reduced and the releasing effect is not sufficient.

## Summary of the Invention

We made research on various release-improving agents with a view to improving the release characteristics of a polyarylene sulfide resin composition, especially a polyphenylene sulfide resin composition, and providing a polyarylene sulfide resin composition in which thermal decomposition is controlled, a gas is not generated at the molding step and the like and excellent mechanical properties are maintained. As a result, it was found that if a selected fatty acid ester as defined below is added, this releasing agent is stable and not decomposed even at the molding temperature of the polyarylene sulfide resin, no gas is generated and the release characteristics are highly improved without reduction of mechanical properties. The selected fatty acid ester has no hydrogen atom on the carbon atom present at the ß-position to the alcoholic hydroxyl group.

More specifically, in accordance with the present invention, there is provided a polyarylene sulfide resin composition comprising:

(A) 100 parts by weight of a polyarylene sulfide resin,

(B) 0.01 to 5 parts by weight of a fatty acid ester selected from pentaerythritol monostearate, pentaerythritol distearate, pentaerythritol tristearate, pentaerythritol monooleate, neopentyl alcohol stearate and neopentyl glycol distearate and,

(C) 0 to 400 parts by weight of an inorganic filler.

The resin used as the base in the present invention is the polyarylene sulfide resin (A), which is a polymer comprising at least 90 mole% of recurring units represented by the structural formula -(-Ar-S-)- (in which Ar stands for an aryl group), and a typical instance is polyphenylene sulfide comprising at least 90 mole% of recurring units -(-Ph-S-)-.

2

A polyarylene sulfide resin having a melt viscosity of 1 to 2000 PaS (10 to 20000 P), especially 10 to 500 PaS (100 to 5000 P), as determined at a temperature of 3100°C and a shear speed to 1200 sec⁻¹ is preferred.

A mixture of a polyarylene sulfide resin and a small amount of other thermoplastic resin may be used as the base resin in the present invention according to need.

Any thermoplastic resin which is stable at high temperatures can be used. For example, there can be mentioned aromatic polyesters composed of an aromatic dicarboxylic acid and a diol or hydroxycarboxylic acid, such as polyethylene terephthalate and polybutylene terephthalate, polyacetals (homopolymers and copolymers), polystyrene, polyvinyl chloride, polycarbonates, ABS, polyphenylene oxide, polyalkyl acrylates and fluororesins. A mixture of two or more of these thermoplastic resins can also be used.

The selected fatty acid esters (B) to be incorporated in the composition of the present invention are higher esters of neopentyl alcohol, neopentyl glycol and pentaerythritol. Tri-esters of pentaerythritol with stearic acid are especially preferred.

In the present invention, the fatty acid ester (B) is used in an amount of 0.01 to 5 parts by weight, preferably 0.1 to 2 parts by weight, per 100 parts by weight of the polyarylene sulfide resin. If the amount of the fatty acid ester is less than 0.01 part by weight, the intended effect of the present invention cannot be attained, and if the amount of the fatty acid ester is too large, no good results are obtained because the mechanical properties are degraded.

In the composition of the present invention, the inorganic filler (C) is not an indispensable component, but in order to obtain a molded article of excellent mechanical strength, heat resistance, dimensional stability (deformation resistance and warp resistance) and electric properties, it is preferred that the inorganic filler (C) be incorporated. A fibrous filler, a powdery filler or a plate filler can be used according to the intended object.

As the inorganic filler, there can be mentioned inorganic fibers, for example, glass fibers, asbestos fibers, carbon fibers, silica fibers, silica-alumina fibers, alumina fibers, zirconia fibers, boron nitride fibers, silicon nitride fibers, boron fibers, potassium titanate fibers and fibers of metals such as stainless steel, aluminum, titanium, copper and brass. A typical instance of the fibrous filler is a glass fiber or a carbon fiber. Incidentally, a fiber of a high-melting-point organic material such as a polyamide, a fluororesin, a polyester resin or an acrylic resin can also be used.

As the powdery filler, there can be mentioned carbon black, silica, quartz powder, glass beads, glass powder, silicates such as calcium silicate, aluminum silicate, kaolin, talc, clay, diatomaceous earth and wollastonite, metal oxides such as iron oxide, titanium oxide, zinc oxide and alumina, metal carbonates such as calcium carbonate and magnesium carbonate, metal sulfates such as calcium sulfate and barium sulfate, silicon carbide, silicon nitride, boron nitride and various metal powders.

As the plate filler, there can be mentioned mica, glass flake and various metal foils.

These inorganic fillers can be used singly or in the form of a mixture of two or more of them. A mixture of a fibrous filler, especially a glass fiber or carbon fiber, and a powdery filler and/or a plate filler is especially preferred for obtaining high mechanical strength, high dimensional accuracy and good electric properties in combination.

It is preferred that a gathering agent or surface active agent be used in combination with the filler. For example, there can be mentioned functional compounds such as an epoxy compound, an isocyanate compound, a silane compound and a titanate compound.

The functional compound is used for a surface treatment or gathering treatment of the filler in advance, or the functional compound is simultaneously added together with other components.

The inorganic filler is used in an amount of 0 to 400 parts by weight, preferably 10 to 400 parts wt., more preferably 10 to 250 parts wt., per 100 parts by weight of the polyarylene sulfide resin. If it is smaller than 10 parts by weight, the mechanical strength is degraded. If it is larger than 400 parts, the moulding operation becomes difficult and the molded article is insufficient in the mechanical strength.

Known substances to be added to ordinary thermoplastic resins and thermosetting resins, for example, stabilizers such as antioxidants and ultraviolet absorbers, antistatic agents, flame retardants, colorants such as dyes and pigments, lubricants and crystallization promoters (nucleating agents) may be added according to the required properties.

The polyarylene sulfide resin composition of the present invention can be prepared by facilities and methods customarily used for the preparation of ordinary synthetic resin compositions. Namely, respective components are mixed and the mixture is formed into molding pellets by kneading and extrusion using a monoaxial or biaxial extruder. Furthermore, there may be adopted a method in which some of necessary components are mixed to form a master batch and a method in which in order to improve dispersion and mixing of the respective components, a part or the whole of the polyarylene sulfide resin is pulverised, mixed with other components and melt-extruded.

As is apparent from the foregoing description and the results obtained in the examples, the polyarylene sulfide resin composition of the present invention has the following effects.

(1) The release resistance is reduced to 1/2 to 1/4 of the release resistance observed when a releasing agent is not added and continuous injection molding can be performed stably while defects caused by insufficient release, such as deformation and breaking of a molded article, are not caused. Moreover, the molding cycle can be shortened and the productivity can be highly improved.

(2) Discoloration of the resin composition is controlled while the resin composition stays in the injection molding machine.

(3) In case of conventional releasing agents, a gas is generated at the injection molding or kneading step, but a gas is not generated in the composition of the present invention and the composition is thermally and chemically stable.

(4) The mechanical properties are not adversely influenced but rather the weld strength is improved, so that the present invention makes a substantial contribution to enhancement of the strength.

(Examples)

The present invention will now be described in detail with reference to the following examples that by no means limit the scope of the invention.

Example 1

Pentaerythritol monostearate was added in an amount shown in Table 1 to a polyphenylene sulfide resin (Fortron KPS supplied by Kureha Xagaku Kogyo), and they were mixed for 5 minutes by a Henschel mixer. A commercially available glass fiber (having a diameter of 13 $\mu$m and a length of 3 mm) was added to the mixture and the mixture was blended for 2 minutes by a blender. The mixture was passed through an extruder maintained at a cylinder temperature of 310°C to obtain a pellet of a polyphenylene sulfide resin composition. A tensile test piece was molded at a cylinder temperature of 320°C and a mold temperature of 150°C in an injection molding machine by using a one-point side gate test piece mold, and the strength of the test piece was measured. Furthermore, a tensile test piece was prepared by using a two-point side gate test piece mold designed to produce a weld at the center of the test piece, and the weld strength was measured. Moreover, injection molding was carried out at a mold temperature of 150°C by using a box-molding mold having a pressure sensor attached to a mold-ejecting pin, and the pressure of the ejecting pin necessary for releasing a molded article was measured as the release resistance. The obtained results are shown in Table 1.

Example 2

A pellet was prepared in the same manner as described in Example 1, except that pentaerythritol distearate was used as the releasing agent, and the release characteristics and physical properties were measured. The obtained results are shown in Table 2.

Example 3

A pellet was prepared in the same manner as described in Example 1, except that pentaerythritol tristearate was used as the releasing agent, and the release characteristics and physical properties were measured. The obtained results are shown in Table 3.

Examples 4 to 6

Pellets were prepared in the same manner as described in Example 1, except that releasing agents and fillers shown in Table 4 were used. The release characteristics and physical properties were measured. The obtained results are shown in Table 4.

Comparative Examples 1 to 8

Pellets were prepared in the same manner as described in Example 1, except that releasing agents and fillers outside the scope of the present invention, shown in Table 5, were used. The release characteristics

4

and physical properties were measured. The obtained results are shown in Table 5.

Table 1  (Example 1)

| Polyphenylene sulfide resin (parts by weight) | Glass fiber (parts by weight) | Pentaerythritol mono-stearate (parts by weight) | Tensile strength [kg/cm²] MPa | Weld strength [kg/cm²] MPa | Release resistance [kg] | Generation of gas at injection molding |
|---|---|---|---|---|---|---|
| 100 | 70 | 0.1 | 174 (1770) | 51.0 (520) | 54 | not caused |
| 100 | 70 | 0.5 | 172 (1750) | 49.1 (500) | 42 | not caused |
| 100 | 70 | 2.0 | 161 (1640) | 50.0 (510) | 38 | not caused |

Table 2  (Example 2)

| Polyphenylene sulfide resin (parts by weight) | Glass fiber (parts by weight) | Pentaerythritol di-stearate (parts by weight) | Tensile strength [kg/cm²] MPa | Weld strength [kg/cm²] MPa | Release resistance [kg] | Generation of gas at injection molding |
|---|---|---|---|---|---|---|
| 100 | 70 | 0.1 | 173 (1760) | 50.0 (510) | 50 | not caused |
| 100 | 70 | 0.5 | 175 (1780) | 52.0 (530) | 45 | not caused |
| 100 | 70 | 2.0 | 160 (1630) | 50.0 (510) | 40 | not caused |

5

Table 3  (Example 3)

| Polyphenylene sulfide resin (parts by weight) | Glass fiber (parts by weight) | Pentaerythritol tristearate (parts by weight) | Tensile strength [kg/cm$^2$] MPa | Weld strength [kg/cm$^2$] MPa | Release resist-ance [kg] | Generation of gas at injection molding |
|---|---|---|---|---|---|---|
| 100 | 70 | 0.1 | 172 (1750) | 54.0 (550) | 40 | not caused |
| 100 | 70 | 0.5 | 173 (1760) | 55.9 (570) | 36 | not caused |
| 100 | 70 | 2.0 | 165 (1680) | 55.9 (570) | 32 | not caused |

EP 0 292 275 B1

Table 4    (Examples 4 to 6)

| Example No. | Polyphenylene sulfide resin (parts by weight) | Glass fiber (parts by weight) | Other filler (parts by weight) | Releasing agent (parts by weight) | Tensile strength $[kg/cm^2]$ MPa | Weld strength $[kg/cm^2]$ MPa | Release resistance [kg] | Generation of gas at injection molding |
|---|---|---|---|---|---|---|---|---|
| 4 | 100 | 70 | 0 | pentaerythritol monooleate    (0.5) | 170 (1730) | 54.9 (560) | 37 | not caused |
| 5 | 100 | 70 | 0 | neopentyl alcohol stearate    (0.5) | 167 (1700) | 54.0 (550) | 42 | " |
| 6 | 100 | 70 | 0 | neopentylglycol distearate    (0.5) | 171 (1740) | 57.9 (590) | 39 | " |

Table 5 (Comparative Examples 1 through 8)

| Comparative Example No. | Polyphenylene sulfide resin (parts by weight) | Glass fiber (parts by weight) | Other filler (parts by weight) | Releasing agent (parts by weight) | Tensile strength [kg/cm$^2$] MPa | Weld strength [kg/cm$^2$] MPa | Release resistance [kg] | Generation of gas at injection molding |
|---|---|---|---|---|---|---|---|---|
| 1 | 100 | 70 | 0 | 0 | 173 (1760) | 51.0 (520) | 140 | not caused |
| 2 | 100 | 70 | 0 | polyethylene wax (0.5) | 149 (1520) | 43.2 (440) | 63 | not caused |
| 3 | 100 | 70 | 0 | ethylenebisstearamide (0.5) | 152 (1550) | 40.2 410 | 52 | caused |
| 4 | 100 | 70 | 0 | zinc stearate (0.5) | 151 (1540) | 39.2 (400) | 40 | caused |
| 5 | 100 | 70 | 0 | glycerol triacetate | 147 (1500) | 37.2 (380) | 35 | caused |
| 6 | 100 | 100 | CaCO$_3$ (100) | 0 | 143 (1460) | 52.0 (530) | 104 | not caused |
| 7 | 100 | 100 | talc (100) | 0 | 113 (1150) | 43.2 (440) | 120 | not caused |
| 8 | 100 | 0 | carbon fiber (40) | 0 | 198 (2020) | 76.5 (780) | 135 | not caused |

## Claims

1. A polyarylene sulfide resin composition comprising:
    (A) 100 parts by weight of a polyarylene sulfide resin,
    (B) 0.01 to 5 parts by weight of a fatty acid ester selected from pentaerythritol monostearate,

8

pentaerythritol distearate, pentaerythritol tristearate, pentaerythritol monooleate, neopentyl alcohol stearate and neopentyl glycol distearate and,
(C) 0 to 400 parts by weight of an inorganic filler.

2. A polyarylene sulfide resin composition as set forth in claim 1, wherein the polyarylene sulfide resin (A) is a polyarylene sulfide resin.

3. A polyarylene sulfide resin composition as set forth in claim 1 or claim 2, wherein the polyarylene sulfide resin (A) has a melt viscosity (determined as described herein) of 10 to 500 PaS (100 to 5000 P).

4. A polyarylene sulfide resin composition as set forth in any preceding claim, wherein the inorganic filler (C) is a fibrous filler.

5. A polyarylene sulfide resin composition as set forth in any one of claims 1 to 3, wherein the inorganic filler (C) is a powdery filler and/or a plate filler.

6. A polyarylene sulfide resin composition as set forth in any one of claims 1 to 3, wherein the inorganic filler (C) is a mixture of a fibrous filler and a powdery filler and/or a plate filler.

7. A polyarylene sulfide resin composition as set forth in claim 4 or claim 6, wherein the fibrous filler is a glass fibre.

8. A polyarylene sulfide resin composition as set forth in any preceding claim, wherein the inorganic filler (C) is present in an amount of 10 to 250 parts by weight per 100 parts by weight of the polyarylene sulfide resin.

**Revendications**

1. Une composition de résine de polysulfure d'arylène comprenant :
(A) 100 parties en poids d'une résine de polysulfure d'arylène,
(B) 0,01 à 5 parties en poids d'un ester d'acide gras choisi parmi le monostéarate de pentaérythritol, le distéarate de pentaérythritol, le tristéarate de pentaérythritol, le monooléate de pentaérythritol, le stéarate d'alcool néopentylique et le distéarate de néopentylglycol, et
(C) 0 à 400 parties en poids d'une charge minérale.

2. Une composition de résine de polysulfure d'arylène telle que définie dans la revendication 1, dans laquelle la résine de polysulfure d'arylène (A) est une résine de polysulfure d'arylène.

3. Une composition de résine de polysulfure d'arylène telle que définie dans la revendication 1 ou la revendication 2, dans laquelle la résine de polysulfure d'arylène (A) présente une viscosité à l'état fondu (déterminée comme décrit ici) de 10 à 500 Pa.s (100 à 5000 Po).

4. Une composition de résine de polysulfure d'arylène telle que définie dans l'une quelconque des revendications précédentes, dans laquelle la charge minérale (C) est une charge fibreuse.

5. Une composition de résine de polysulfure d'arylène telle que définie dans l'une quelconque des revendications 1 à 3, dans laquelle la charge minérale (C) est une charge en poudre et/ou une charge en lamelles.

6. Une composition de résine de polysulfure d'arylène telle que définie dans l'une quelconque des revendications 1 à 3, dans laquelle la charge minérale (C) est un mélange d'une charge fibreuse et d'une charge en poudre et/ou d'une charge en lamelles.

7. Une composition de résine de polysulfure d'arylène telle que définie dans la revendication 4 ou la revendication 6, dans laquelle la charge fibreuse est une fibre de verre.

8. Une composition de résine de polysulfure d'arylène telle que définie dans l'une quelconque des revendications précédentes, dans laquelle la charge minérale (C) est présente en une quantité de 10 à 250 parties en poids pour 100 parties en poids de la résine de polysulfure d'arylène.

**Patentansprüche**

1.  Polyarylensulfidharz-Zusammensetzung enthaltend:
    (A) 100 Gew.-teile eines Polyarylensulfidharzes,
    (B) 0,01 bis 5 Gew.-teile eines Fettsäureesters, gewählt aus Pentaerythritolmonostearat, Pentaerythritoldistearat, Pentaerythritoltristearat, Pentaerythritolmonooleat, Neopentyl-alkoholstearat und Neopentylglykoldistearat und
    (C) 0 bis 400 Gew.-teile eines anorganischen Füllmaterials.

2.  Polyarylensulfidharz-Zusammensetzung nach Anspruch 1, worin das Polyarylensulfidharz (A) ein Polyarylensulfidharz ist.

3.  Polyarylensulfidhars-Zusaensetzung nach Anspruch 1 oder 2, worin das Polyarylensulfidharz (a) eine Schmelzviskosität (wie in der Beschreibung definiert) von 10 bis 500 PaS (100 bis 5 000 P) aufweist.

4.  Polyarylensulfidharz-Zusammensetzung nach einem der vorhergehenden Ansprüche, worin das anorganische Füllmaterial (C) ein faseriges Füllmaterial ist.

5.  Polyarylensulfidharz-Zusammensetzung nach einem der Ansprüche 1 bis 3, worin das anorganische Füllmaterial (C) ein pulveriges und/oder plättchenförmiges Füllmaterial ist.

6.  Polyarylensulfidharz-Zusammensetzung nach einem der Ansprüche 1 bis 3, worin das anorganische Füllmaterial (C) eine Mischung eines faserigen Füllmaterials und eines pulverigen und/oder plättchenförmigen Füllmaterials ist.

7.  Polyarylensulfidharz-Zusammensetzung nach Anspruch 4 oder 6, worin das faserige Füllmaterial eine Glasfaser ist.

8.  Polyarylensulfidharz-Zusammensetzung nach einem der vorhergehenden Ansprüche, worin das anorganische Füllmaterial (C) in einer Menge von 10 bis 250 Gew.-teilen pro 100 Gew.-teilen des Polyarylen-sulfidharzes vorliegt.